# EUROPEAN PATENT APPLICATION

(11) **EP 2 642 218 A1**
(43) Date of publication of application: **25.09.2013**
(21) Application number: 12179408.5
(22) Date of filing: 06.08.2012
(51) Int. Cl.: F24J 2/52, H01L 31/042

(54) **A modular apparatus for architectural integration of frameless solar modules**

(30) Priority: 23.03.2012 IT AN20120028
(71) Applicant: Brandoni Solare S.p.A., 60022 Castelfidardo (AN) (IT)
(72) Inventor: Liciotti, Claudio, 63011 Sant'Elpidio a Mare (FM) (IT); Cingolani, Andrea, 60022 Castelfidardo (AN) (IT)
(74) Representative: Baldi, Claudio

(57) **Abstract**

The present invention relates to an apparatus composed of three modular metal sections (1,2,3) for architectural integration of frameless laminate solar modules (M) on the inclined pitches of building roofs.

## Description

The present patent application for industrial invention relates to a modular apparatus for architectural integration of frameless solar modules.

More precisely, the apparatus of the invention allows for architecturally integrating a solar installation on the roof of a building, replacing traditional building materials (in particular roof tiles) and making the solar installation an integral part of the roof.

In any case, the peculiarities and advantages of the invention will become more evident after a short description of the prior art.

Many types of solutions are currently available on the market for the integration of solar modules in building roofs in order to minimize the visual impact generated by the solar installation.

All solutions of the prior art make use of traditional or laminate solar modules (meaning solar modules without a frame) with special fixing structures.

The solar industry has been focusing its attention on architectural integration because the market of the future will be especially represented by the residential sector, in which solar installations must have a low visual impact.

The technologies that have been developed so far can be divided in four main categories.

The first technology refers to solutions with flexible solar modules that can be applied directly to the surface of the roof, after applying a waterproofing treatment to the roof. This solution is strictly related with the use of solar modules fabricated on flexible supports, especially films.

The second technology makes use of the so-called solar roof tiles, it being provided that in such a case the solar component is applied directly on roof tiles made of plastic material.

However, such a technology is impaired by a significant drawback due to the fact that it is only possible to install a solar module with small dimensions on each roof tile. In view of this fact, in order to generate a functional solar installation, a large number of solar roof tiles must be used, requiring multiple external electrical connections to the modules.

The third technology provides for using solar modules mounted into a frame. However, such a solution is extremely expensive, and cannot be used on many types of roofs.

The fourth technology refers to the so-called installation systems for architectural integration, in which the solar modules are used to replace the traditional components of the roof, being fixed to the bearing structure of the roof according to specific installation modes.

Traditional installation systems for architectural integration require the use of multiple aluminum structures to support the solar modules.

Said systems provide for using structures fixed transversally to the inclination of the roof, occasionally requiring the use of structures and counter-structures to avoid creating a barrier for the outflow of the water that may penetrate through the surface obtained with solar modules.

Some systems of this kind also provide for different anchoring systems to be fixed to the roof in order to support the solar modules.

An additional drawback, resulting from the use of traditional structures for architectural integration, relates to the fact that the fixing supports of the modules must be fixed to the bearing structure of the roof in predetermined positions.

In view of the above, geometric tolerances must be very small to guarantee a sturdy installation. However, it must be noted that, when working on the roof, it is very difficult to respect tolerances of one or a few millimeters.

Moreover, in many instances, the traditional systems for architectural integration require the use of the so-called laminate modules, meaning solar modules made of tempered glass without a reinforcement frame.

Because of the lack of such a frame said laminate modules can be easily damaged during handling. In spite of a very high frontal impact resistance, they are extremely fragile on the perimeter and on the corners, and even a light impact in these points can break the tempered glass completely.

Solutions have been devised in order to protect said laminate modules with a perimeter frame. However, similar solutions are impaired by the fact that the presence of such a frame can cause water stagnation on the roof (between two adjacent modules), thus creating undesired shading of the module cells.

Moreover, such a complex structure of the solar modules can excessively increase the weight of the entire solar installation, imposing an excessive weight for the bearing structure of the roof.

As mentioned earlier, the technology that is intended to be protected within the present invention falls into the category of the so-called installation systems for architectural integration.

However, being the result of a careful evaluation of the prior art, the present invention is able to avoid all the aforementioned drawbacks.

In fact, the apparatus of the invention, which integrates solar modules on the bearing structure of a roof, has been devised with the specific purpose of achieving versatility of use, as well as easiness and rapidity of installation, with significant advantages compared to traditional installation solutions.

Moreover, another purpose of the apparatus of the present invention is to provide, in favor of the tempered glass laminate that acts as solar module, a metal finish frame that, on one side, offers excellent protection to the laminate during handling operations, and on the other side is characterized by reduced weight, in order to avoid overloading the bearing structure of the roof.

An additional purpose of the present invention is to provide the solar installation obtained with the technology of the invention with excellent seal against penetration of rainwater under direct exposure.

The apparatus that has permitted to achieve the aforementioned purposes is formed of three parts that are used repeatedly to cover an inclined roof, using the solar modules obtained as rectangular panels of tempered glass.

Firstly, it must be noted that the roof adapted to be covered with said solar modules is normally provided, for each inclined pitch, with a bearing structure formed of a series of wood strips in adjacent position, oriented in the inclination direction of the pitch and regularly spaced.

Each adjacent pair of wood strips acts as support for a corresponding row of solar modules, in such manner that they can perfectly cover the space provided between two adjacent strips.

Therefore, each module must have a length slightly higher than the space between two adjacent wood strips.

Such a condition allows for fixing one of the lateral borders (or short side) of each solar module against the upper side of one of said wood strips and for similarly fixing the opposite lateral border (or short side) of the same solar module to the wood strip in immediately adjacent position.

Starting from these general information, it is necessary to precise the real nature and specific use of the three aforementioned parts of the apparatus of the invention.

The first part consists in a first metal section, with basically L-shaped profile. Two specimens of said metal section are used on each solar module and are firmly mounted on the vertical borders of the solar module.

The second part consists in a second metal section with complex box-shaped structure and is firmly mounted on the lower horizontal border of the solar module.

It is understood that each of said rectangular panels of tempered glass acting as solar modules is efficaciously protected, on three of its four sides, by a metal open frame structure.

It must be noted that such an open frame structure is mounted on solar modules in the factory by means of silicone or other sealant.

Therefore, during handling operations for storage, transportation and final installation in the building site, each solar module is protected against impacts by mean of the metal structure acting as frame.

Moreover, the metal structure acting as frame is especially advantageous when the solar module is fixed between the wood strips of the bearing structure of the roof.

In fact, the two specimens of the first metal section - reference being made to the sections mounted on the short sides of the solar module - act as support and fixing points to fix the module to the bearing wood strips.

At the same time they protect the borders of the solar module against penetration of humidity and other weather agents, and prevent the back side of the solar module from sliding, with respect to the wood strips, because of thermal expansion and mechanical stress.

The specimen of the second metal section, which is mounted on the lower horizontal border of the solar module, provides easy coupling between the solar module and the solar module in immediately lower position, guaranteeing the so-called "tile effect" that avoids rainwater penetration between the two modules.

On the other hand, the second metal section provides mechanical resistance to the solar module, and protects the lower horizontal border of the module against humidity and other weather agents.

In general, it can be said that the presence of said metal open frame in each laminate solar module provides a more practical and more reliable roof covering structure, which is formed of parallel vertical rows of modules.

In any case, after completing the installation, each of said wood strips forming the bearing structure of each pitch of the roof (except for the wood strips at the lateral ends of the pitch) acts as support and fixing surface for the lateral borders of two rows of solar modules, viz. for the "left-hand" lateral borders of the row of modules situated on its right-hand side and for the "right-hand" lateral borders of the row of modules situated on its left-hand side.

It is now necessary to form a screen, which also acts as conveyor for rainwater, above each wood strip and above the borders of the two adjacent rows of solar modules.

To that purpose the third part of the apparatus of the invention is advantageously used, consisting in an additional metal section with "overturned omega-shaped" section.

The front concave side of said metal section conveys the rainwater flowing along the inclined pitch of the roof by gravity, whereas the back side, suitably provided with seals, protects the borders of the two adjacent rows of solar modules, preventing rainwater penetration.

For explanatory reasons, the description of the invention continues with reference to attached drawings, which only have an illustrative, not limiting value, wherein:
- Fig. 1 is an axonometric view of the first metal section of the apparatus of the invention;
- Fig. 2 is an axonometric view of the second metal section of the apparatus of the invention, illustrated together with an enlarged detail;
- Figure 3 is a cross-sectional view of the second metal section of Fig. 2;
- Figure 4 is the same as Fig. 3, except for it shows said second metal section in operating position between two solar modules;
- Figure 5 is a view that shows the third metal section of the apparatus of the invention in operating position;
- Figure 6 is an axonometric view of the coupling modes of a solar module with two specimens of the first metal section of Figure 1;
- Figure 7 and relevant views of enlarged details are axonometric views of the solar module of Fig. 6 equipped with the corresponding specimens of said first metal section;
- Figure 8 is an axonometric view of the coupling modes of a solar module with a specimen of the second metal section of Figure 2;
- Figure 9A and relevant views of enlarged details are axonometric views of the solar module of Fig. 8 equipped with the corresponding specimen of said second metal section;
- Figure 9B and relevant enlarged view are axonometric rear views of the solar module of Figure 9A;
- Figure 10 and relevant enlarged view are axonometric views of the installation mode of two specimens of said solar module on the inclined pitch of a roof;
- Figure 11 is a diagrammatic axonometric view of the assembly modes of multiple specimens of said solar module in the inclined pitch of a roof;
- Figure 12 is a diagrammatic axonometric view of the final position of said cooperating specimens of the solar module;
- Figure 13 is an axonometric view of the entire covering with solar modules of the inclined pitch of a roof, obtained with the apparatus of the invention;
- Figure 14 is an axonometric view of the installation modes of a specimen of the third metal profile of the apparatus of the invention.

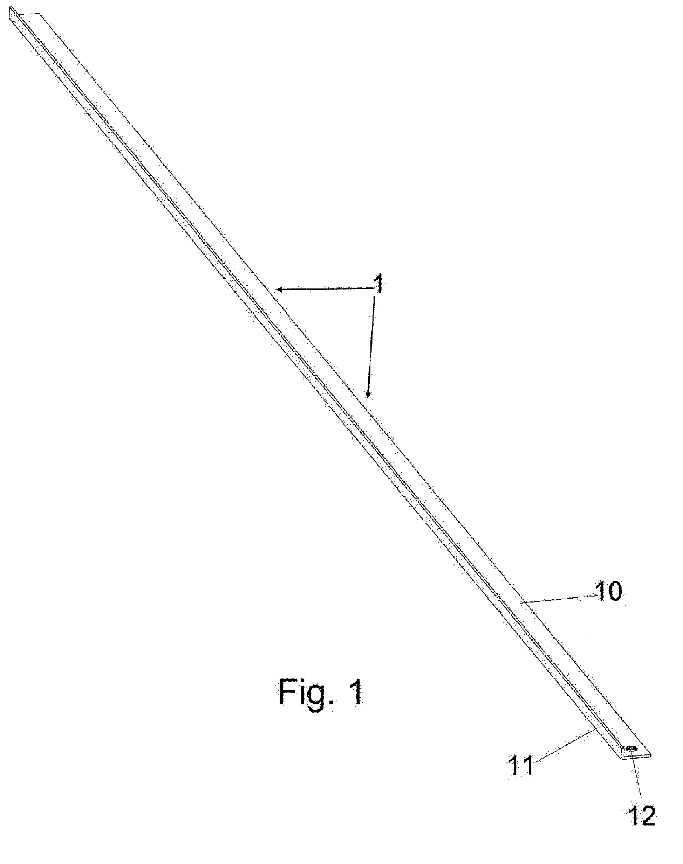

Referring to Fig. 1, the first part of the apparatus of the invention consists in a first metal section (1) provided with a substantially L-shaped cross-section, being composed of a first wing (10) and a second shorter wing (11) perpendicularly protruding from one of the longitudinal edges of the first wing (10).

In particular, the height of the second wing (11) is equal to the thickness of the solar module (M) that cooperates with said metal section (1).

Said first metal section (1) is also provided with a through hole (12) at one of the ends of said first wing (10).

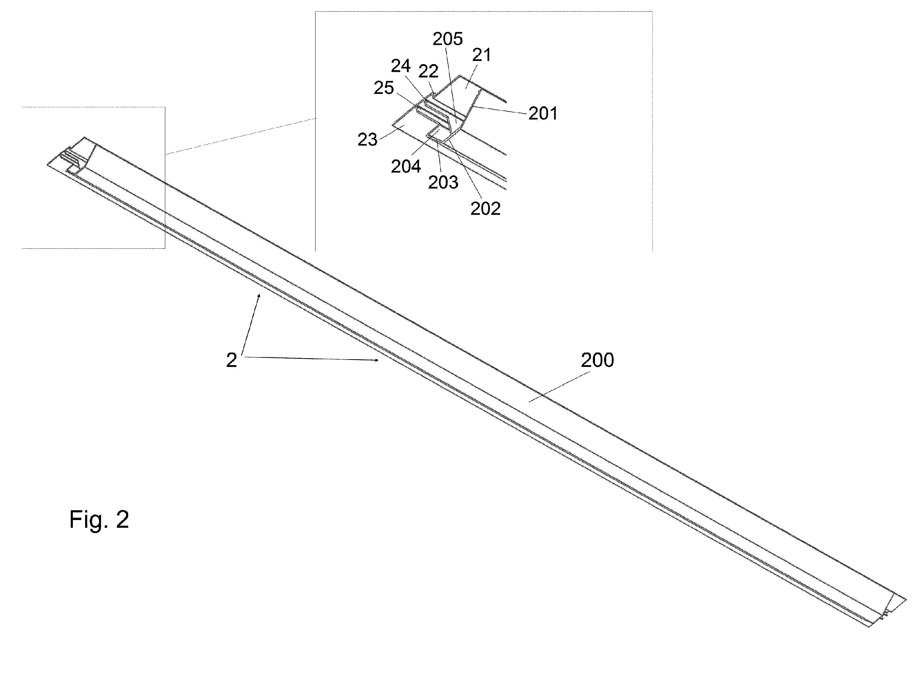

Referring to Figs. 2, 3 and 4, the second part of the apparatus of the invention consists in a second metal section (2) provided with a complex box-shaped structure.

Said second metal section (2) comprises a substantially vertical bearing wall (20) with a basically S-shaped cross-section.

Said wall (20) comprises an upper section (21) joined by means of a horizontal step (22) with a lower section (23) in forward position with respect to the upper section (21).

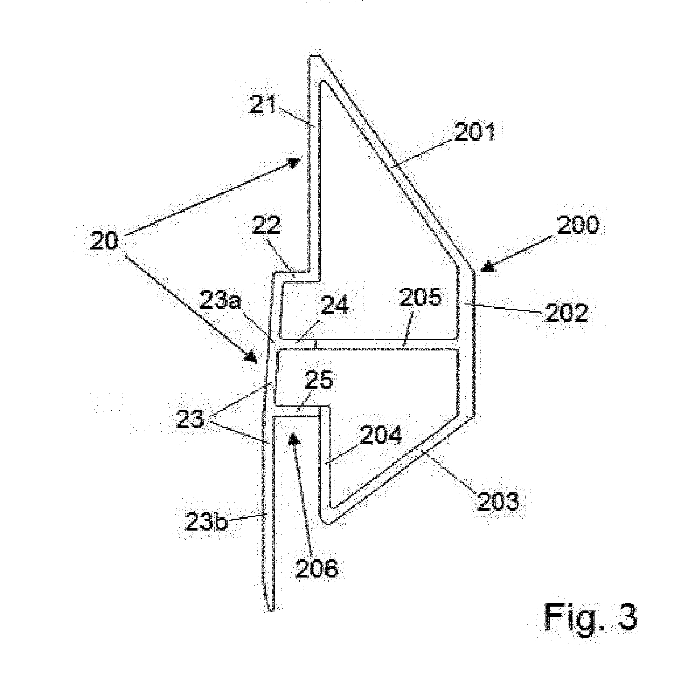

As illustrated in Fig. 3, said upper section (21) of the wall (20) is perfectly vertical and said lower section (23) has a first section (23a), joined by means of said step (22), which is slightly sloping, and a second section (23b) that is perfectly vertical and therefore parallel to said upper section (21) of the second metal section (2).

Moreover, the front side of said wall (20) is substantially flat, except for the presence of said step (22), whereas the back wall has a complex box-shaped profile.

From said back side, for its entire length, two longitudinal wings protrude (24, 25) in parallel position under said step (22), the first wing (24) being situated at a height immediately lower than the step (22), and the second wing (25) being situated at a lower height than the first wing (24); it being also provided that the step (22) and the two wings (24, 25) are perfectly equidistant.

Moreover, the step (22) has a rather reduced width, substantially equal to the thickness of a solar module (M).

From the center of the back side of said bearing wall (20) a box-shaped trapezoidal section (200) protrudes, having a lower length than the vertical wall (20), as illustrated in Fig. 2.

In view of the above, the two ends of the back side of the bearing wall (20) remain visible on both sides of said trapezoidal section (200). Therefore, said step (22) and said wings (24,25) remain shortly visible at the two sides of said trapezoidal section (200).

Said trapezoidal section (200) comprises the following parts, from up downwards:
- a first inclined wall (201) joined with the top longitudinal border of said upper section (21) of said bearing wall (20)
- a first vertical wall (202) joined with the lower longitudinal border of said first inclined wall (201), substantially at the height of said step (22)
- a second inclined wall (203) facing said bearing wall (20), which is joined in upper position, basically at the height of said second wing (25), with the lower longitudinal border of said vertical wall (202) and in lower position with a second upward-facing vertical wall (204).

Moreover, said second vertical wall (204) is joined with the longitudinal border of said second horizontal wing (25), whereas a stiffening partition (205) branches off in coplanar direction from the first horizontal wing (24), being joined at the end with the internal side of said first horizontal wall (202).

As illustrated in Fig. 3, a substantially overturned U-shaped housing (206) is formed under the second wing (25) between said second vertical wall (204) of the box-shaped trapezoidal section (200) and the second portion (23b) of the lower section (23) of said bearing wall (20).

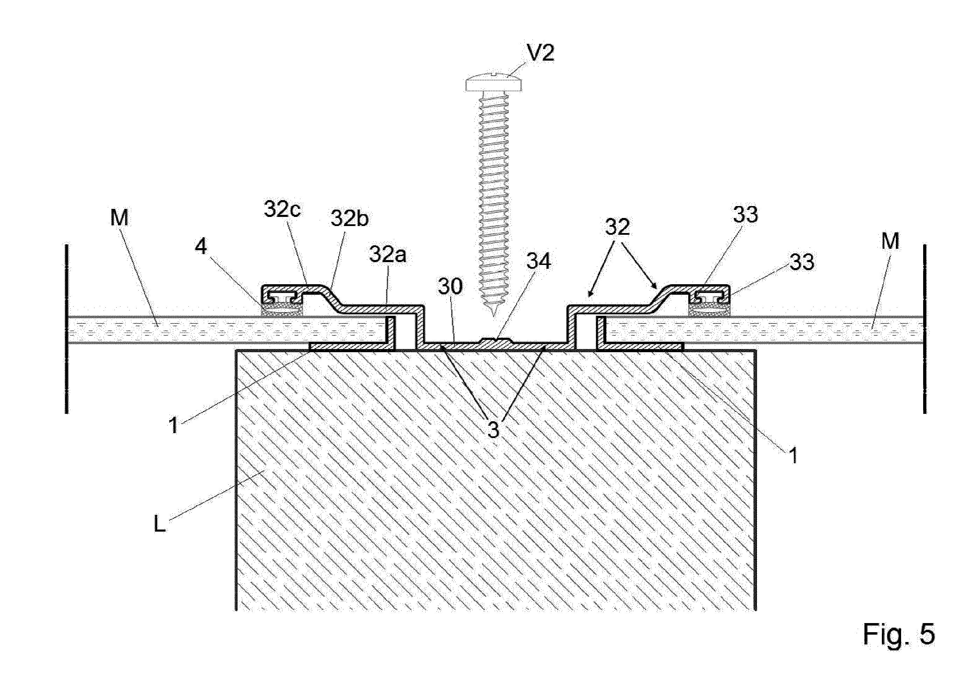

Referring to Fig. 5, the third part of the apparatus of the invention consists in a third metal section (3) with substantially "overturned omega-shaped" section.

It is composed of a central flat wall (30) and two identical edges (31) protruding upwards from the longitudinal borders of the flat wall and provided with height slightly higher than the thickness of the solar module (M).

A wing with S-shaped section (32) branches off outwards from the top longitudinal border of each of said edges (31), being formed of a first flat portion (32a), a short upward-inclined portion (32b) and a second flat portion (32c) at a height slightly higher than the first flat portion (32a).

From the lower side of said flat portion (32c), towards its end, two short longitudinal L-shaped sections (33) protrude downwards, in symmetrically opposite position, facing one against the other.

Said central flat wall (30) is centrally provided with a central longitudinal channel (34) with lightened thickness for engagement of self-tapping screws (V2).

After explaining the configuration of the three parts (1, 2, 3) of the apparatus of the invention, the following description describes how these parts are used to install, on each inclined pitch of a roof, a plurality of said laminate solar modules (M) obtained with rectangular tempered glass panels.

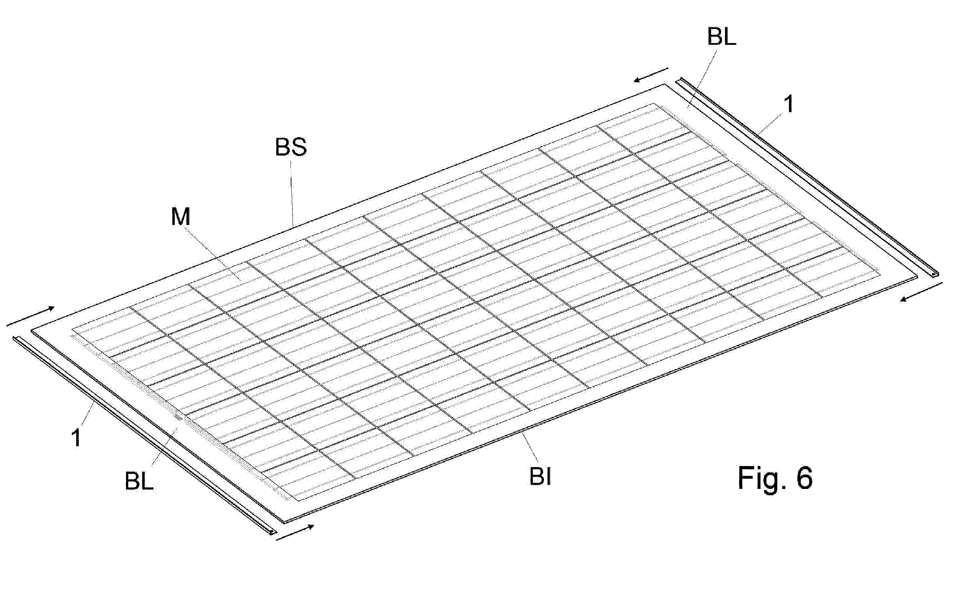

The first operation consists in the application of two specimens of said first metal section (1) in correspondence of the lateral borders (BL) of a solar module (M), in such manner that said borders overlap said first wings (10) of said two first metal sections (1) and are engaged against the internal side of the second wings (11), as illustrated in Fig. 6.

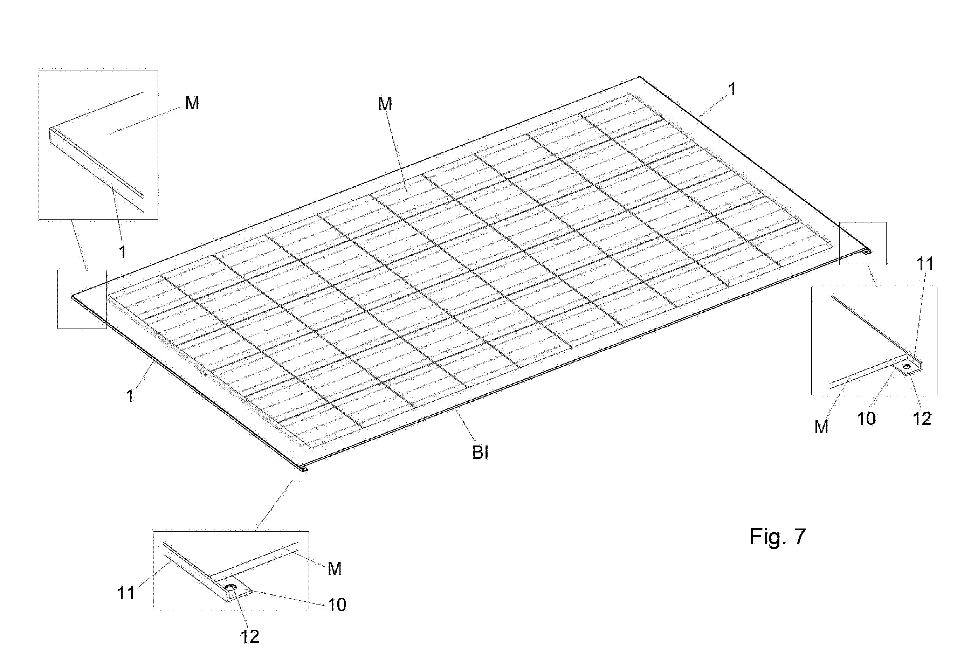

As illustrated in Fig. 7, said first metal sections (1) have a length higher than said lateral borders of each solar module (M); the two first metal sections (1) are coupled with the module (M) in such manner that the lower ends protrude from the lower horizontal border (BI) of the module (M) and said through holes (12) obtained in correspondence of said ends are not covered by the module (M).

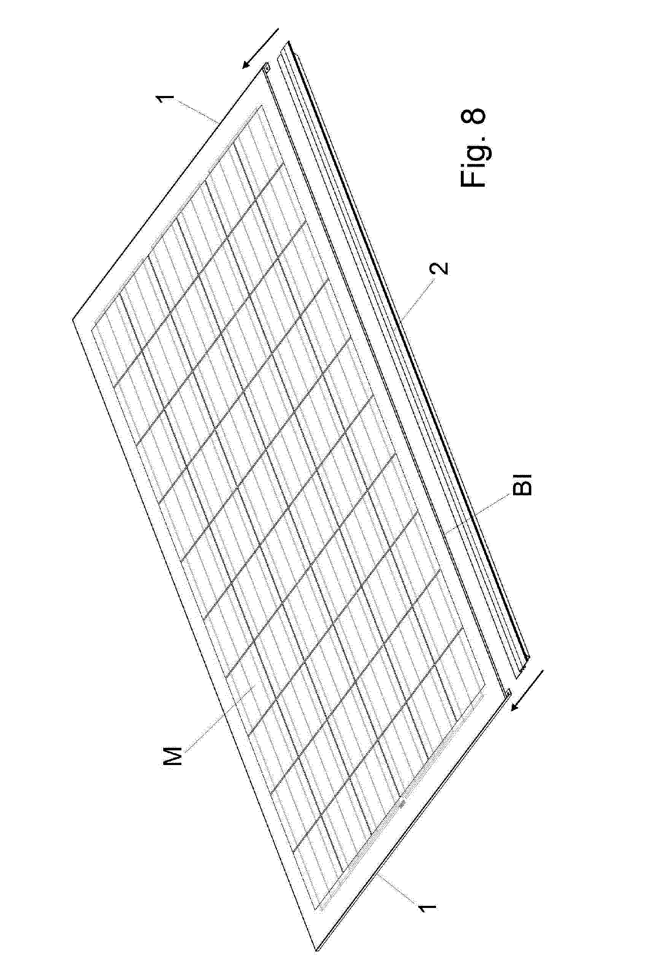

Fig. 8 illustrates the following operation, which consists in coupling a specimen of said second metal section (2) on the lower horizontal border (BI) of the module (M) already coupled with said two first metal sections (1).

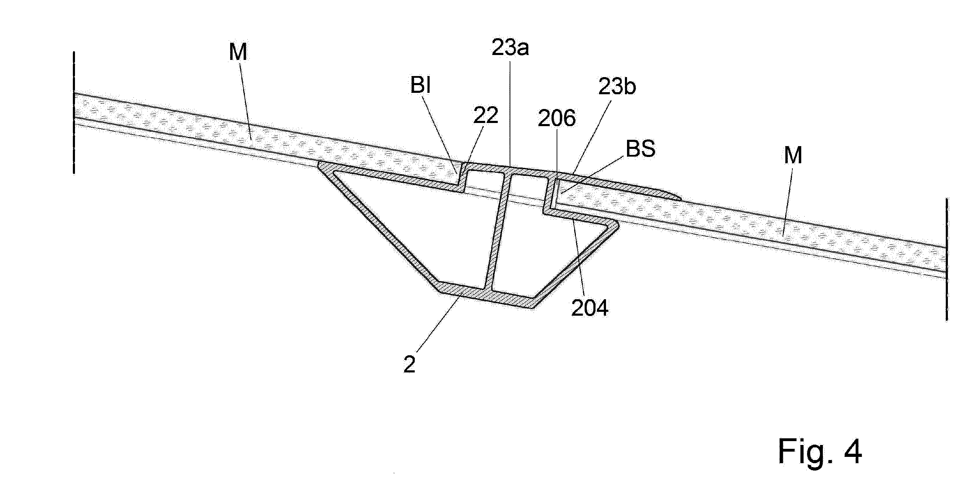

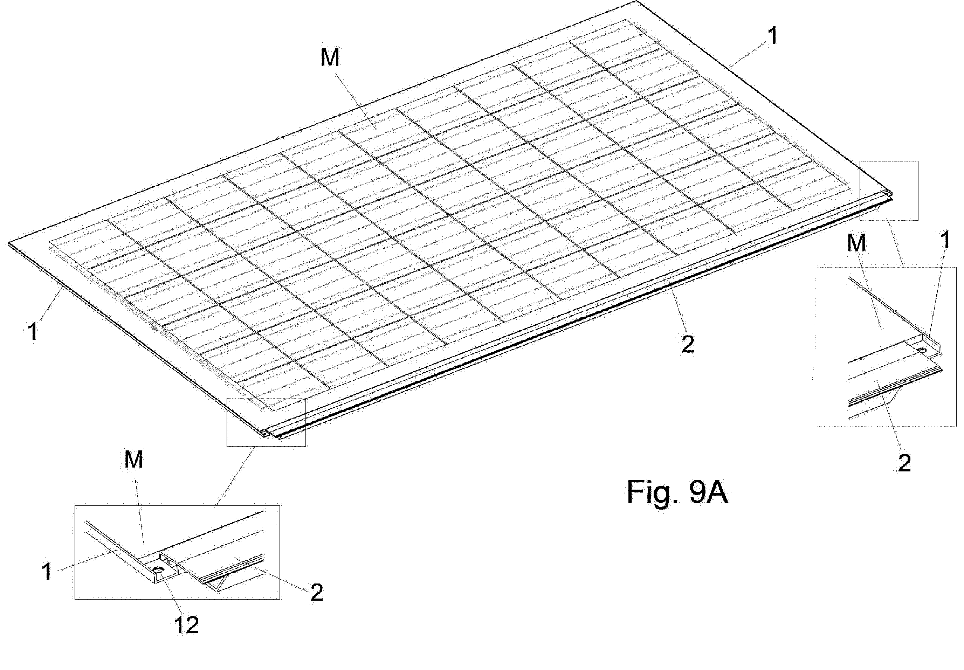

Referring to Figs. 9A and 4, it must be noted that such a coupling is considered to be completed when said longitudinal step (22) of the second metal section (2) is engaged against the lower horizontal border (BI) of the solar module (M), in such a condition that said upper section (21) of the vertical bearing wall (20) of the second metal section (2) is engaged against the front side of the solar module (M).

As illustrated in Fig. 9A, the second metal section (2) has a length lower than the lower horizontal border (BI) of the solar module (M). The difference between the two lengths is basically two times the width of said first wing (10) of the first metal section (1).

In view of the above, after being perfectly centered with respect to the lower horizontal border (BI) of the solar module (M), said second metal section (2) does not cover the holes (12) of said two first metal sections (1), which remain visible on the two sides of the second metal section (2).

It must be noted that the coupling of the two specimens of the first metal section (1) and the individual specimen of the second metal section (2) with the corresponding borders of the solar module (M) is made irreversible by means of suitable layers of silicone or other sealant, which also guarantee the perfect seal against water and humidity.

In any case, it must be noted that the installation of the three metal sections is preferably carried out in the factory, thus creating a protection frame on three sides of the solar module (M), which is suitable to ensure integrity of the module in all storage, transport and handling operations before the final installation on the roof in the building site.

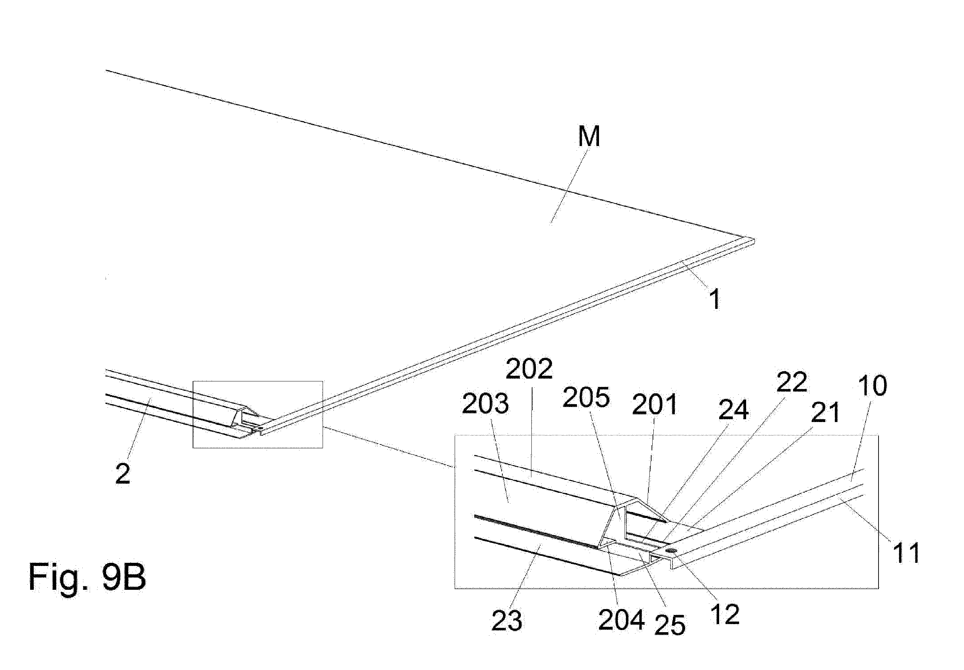

The presence of such a protection frame is particularly evident in Fig. 9B, wherein the solar module (M) is shown from its back side.

This description continues describing the way in which the various specimens of the solar module (M), already equipped with said protection frame, are installed on the inclined pitch of a roof.

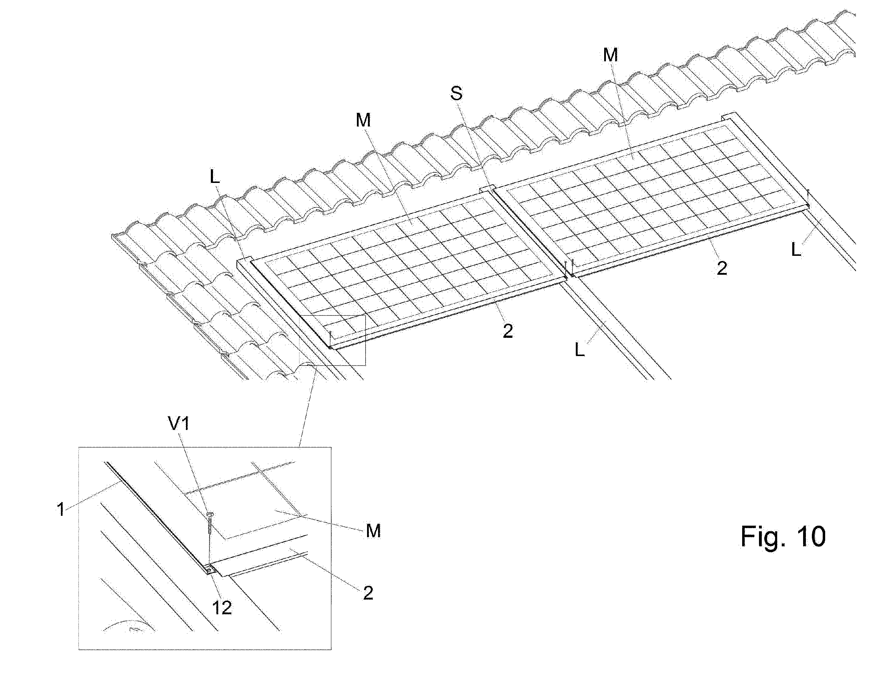

As illustrated in Fig. 10, the solar modules (M) are installed using the bearing structure of the inclined pitch of the roof, which is usually formed of a series of wood strips (L) in adjacent position.

More precisely, each solar module (M) covers the space comprised between two adjacent strips (L), in such manner that its lateral borders (BL) are respectively fixed above the right-hand strip and the left-hand strip.

For this reason, each of said solar modules (M) has a length higher than the space between each adjacent pair of said strips (L).

So, the lateral borders (BL) of the solar module (M) are engaged against the front side of the strips (L) and firmly fixed in such a position by means of two screws (V1) inserted into said through holes (12) provided on the two specimens of the first metal section (1) already fixed to said lateral borders (BL).

As illustrated in the enlarged view of Fig. 10, said trapezoidal section (200) of the second metal section (2) has a length substantially equal to the space provided between said two adjacent strips (L), in such manner to be inserted deeply between the opposite sides of the latter.

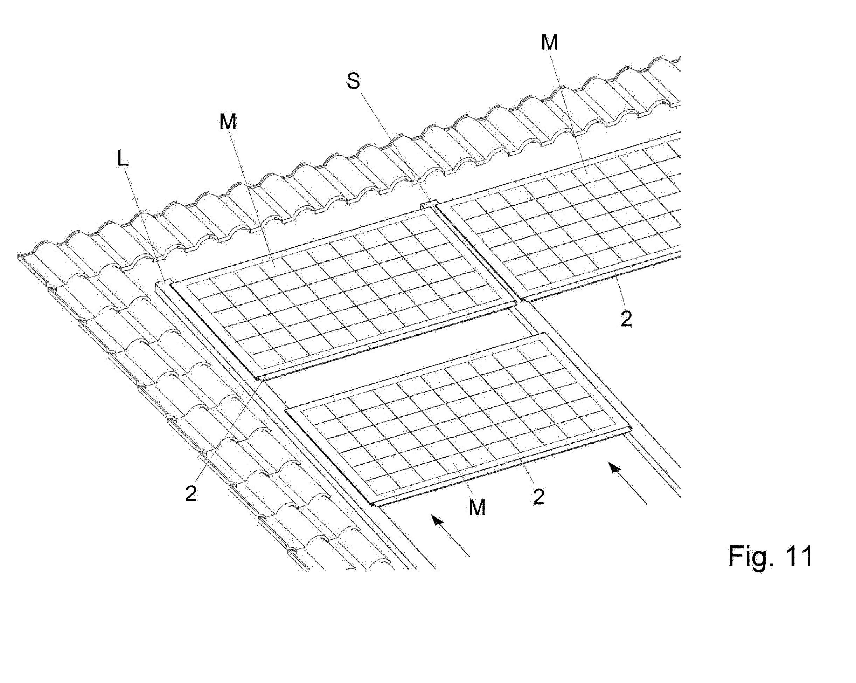

In particular, as illustrated in Fig. 11, the first solar modules (M) to be installed must be fixed towards the top of the roof, viz. on the top of each adjacent pair of strips (L).

The above is provided because the solar panels (M) to be installed afterwards must be situated under the ones that have been previously installed.

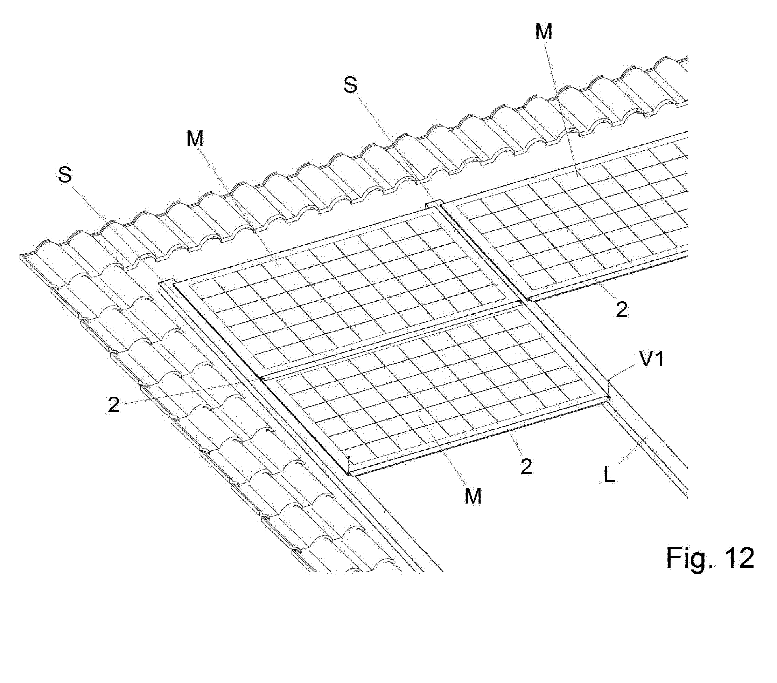

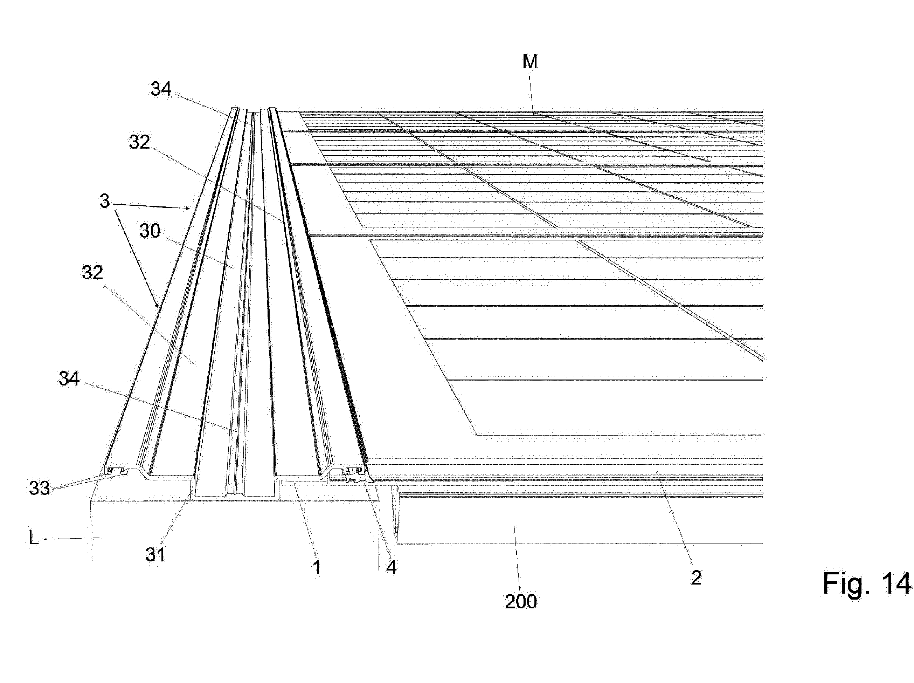

As illustrated in Figs. 12 and 14, each following specimen of the solar module (M) must be engaged against the corresponding pair of strips (L) by providing that the upper horizontal border (BS) is exactly inserted into said overturned-U shaped housing (206) of the second metal section (2) fixed to the lower horizontal border (BI) of the specimen of solar module (M) in upper position.

Because of such an insertion, the upper horizontal border (BS) of the solar module (M) in lower position can take advantage of the protection against water and humidity penetration provided by the lower section (23) of said bearing vertical wall (20) of the second metal section (2).

In view of the above, the slightly inclined configuration of the lower section (23) of the vertical wall (20), and more precisely of its first portion (23a) is especially useful in order to favor the outflow of rainwater along the inclined pitch of the roof.

It is worthless saying that also the following specimen of solar module (M) must be firmly fixed to the two wood strips (L) by means of the two screws (V1) inserted into the corresponding holes (12) of the two specimens of the first metal section (1) mounted on the lateral borders (BL).

It must be noted that, after such a coupling, said lower section (23) of the bearing vertical wall (20) of the second metal section (2) can exert the so-called "roof tile effect" with respect to the solar module (M) in order to favor the outflow of rainwater and, most of all, prevent water penetration at the level of the upper horizontal border of the solar module in lower position.

As illustrated in Fig. 12, except for the wood strips (L) situated at the two lateral ends of the inclined pitch of the roof, each wood strip (L) supports a first row of solar modules (M) in correspondence of the left-hand border and a second row in correspondence of the right-hand border. Moreover, an uncovered intermediate space (S) is left between the lateral borders (BL) of the solar modules (M) of the two rows, extending for the entire length of the strip (L).

It is therefore necessary to "coat" such an uncovered space (S), as well as the lateral borders (BL) of the solar modules (M) of the two said adjacent rows fixed to the same strip (L).

Such a need also affects the wood strips (L) at the lateral ends of the inclined pitch of the roof, regardless of the fact that they act as support for the lateral borders (BL) of a single row of solar modules (M).

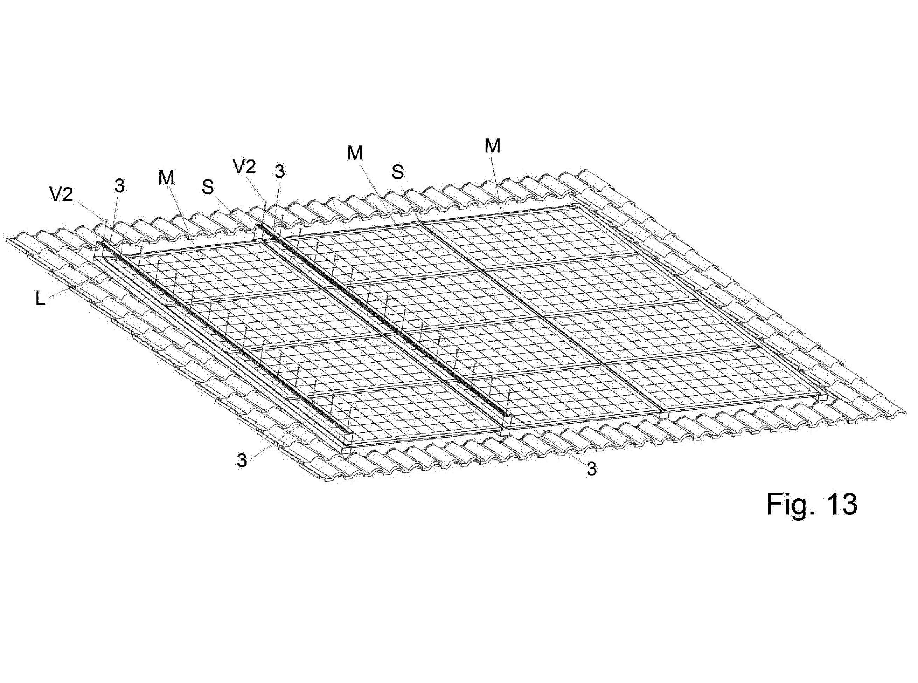

For the above purpose the third metal section (3) of the apparatus of the invention is used, according to the installation modes illustrated in Figs. 13 and 14, as well as in Fig. 5.

In particular, each specimen of said third metal section (3) must be engaged against said uncovered space (S) of the strip (L) and screwed with self-tapping screws (V2) crossing said central channel (34) and engaging in the wood strip (L).

As illustrated in Fig. 5. the "overturned-omega" configuration of said section allows its two lateral wings (32) to overlap the lateral borders (BL) of the two adjacent rows of solar modules (M), as well as overlap the corresponding specimens of the first metal section (1) coupled with said lateral borders (BL).

Tightness of such overlapping against water and humidity penetration is guaranteed by the presence of two seals (4) attached to said pairs of longitudinal sections (33) provided under the free ends of said two wings (32).

## Claims

1. A modular apparatus for architectural integration of frameless solar modules (M) provided with rectangular shape, **characterized in that** it is composed of the following parts:
- a first metal section (1) with length higher than the lateral edges (BL) of each of said solar modules (M) and also provided with L-shaped cross-section, being formed of a first wing (10) and a second wing (11) that protrudes perpendicularly from one of the longitudinal edges of the first wing (10); it being provided that said first wing (10) is provided towards one end, in correspondence of the section exceeding the length of said lateral edges (BL) of the solar module (M), with a through hole (12) for a screw (V1)
- a second metal section (2) provided with a substantially vertical bearing wall (20), comprising an upper section (21) joined by means of a horizontal step (22), with width basically equal to the thickness of each of said solar modules (M), with lower section (23) in forward position with respect to the first one; it being provided that said bearing wall (20) is provided on the back with:
• a second longitudinal wing (25) in parallel position under said step (22), protruding for the entire length of said lower section (23) of the bearing wall (20) with width basically equal to the thickness of each of said solar modules (M)
• a box-shaped longitudinal section (200) situated in the central area of the bearing wall (20), having a length lower than the bearing wall (20); it being also provided that said box-shaped section (200) is joined in upper position to the top longitudinal border of said bearing wall (20) and in lower position to the longitudinal border of a second vertical wall (204) protruding downwards from said second wing (25) in opposite position to the lower section (23) of the bearing wall (20), in such manner to originate an overturned U-shaped housing (206) situated under said second wing (25)
- a third metal section (3) basically provided with "overturned omega-shaped" profile, being formed of a horizontal wall (30), from the longitudinal borders of which two edges (31) protrude upwards, having a height at least equal to the thickness of each of said solar modules (M); it being provided that a basically horizontal wing (32) branches off outwards from the top of each of said edges (31), being adapted to support longitudinal seal means (4) in lower position; finally, it being provided that said horizontal wall (30) is centrally provided with a longitudinal channel (34) for self-tapping screws (V2).

2. The apparatus of claim 1, **characterized in that** said second wing (11) of the first metal section (1) has a height basically equal to the thickness of each solar module (M).

3. The apparatus of claim 1, **characterized in that** said vertical bearing wall (20) of the second metal section (2) is provided with a first longitudinal wing, in equidistant intermediate position between said step (22) and said second longitudinal wing (25).

4. The apparatus of claim 3, **characterized in that** said bearing wall (20) of said second metal section (2) is provided with a first portion (23a) with inclined profile and a second portion (23b) in lower position with vertical profile.

5. The apparatus of one or more of the preceding claims, **characterized in that** said box-shaped section (200) of said second metal section (2) is formed of:
- a first inclined wall (201) joined with the top longitudinal border of said upper section (21) of said bearing wall (20)
- a first vertical wall (202) joined with the lower longitudinal border of said first inclined wall (201), substantially at the eight of said step (22)
- a second inclined wall (203), facing towards said bearing wall (20), which is joined on top, basically at the height of said second wing (25), with the lower longitudinal border of said vertical wall (202) and in lower position with said second vertical wall (204), which is joined in turn with said second wing (25) in upper position
- a partition (205) branching off in coplanar direction from said first wing (24) and joined with the internal side of said first horizontal wall (202).

6. The apparatus of claim 1, **characterized in that** each of said wings (32) of said third metal section (3) is provided with a substantially S-shaped section (3), being formed of a first flat portion (32a), a short upward-inclined portion (32b) and a second flat portion (32c) at a height slightly higher than the first flat portion (32a).

7. The apparatus of claim 6, **characterized in that** said longitudinal seal means provided in each of said wings (32) of the third metal section (3) consist in seals made of rubber or other suitable materials (4) adapted to be attached in correspondence of pairs of L-shaped longitudinal sections (33) in symmetrically opposite position, protruding in lower position from said second flat portion (32c) of each wing (32).

## Amended claims

### Amended claims in accordance with Rule 137(2) EPC.

**1.** A modular apparatus for architectural integration of frameless solar modules (M) provided with rectangular shape, comprising:
- solar modules (M), each solar module (M) comprising lateral edges (BL), a lower horizontal border (BI) and an upper horizontal border (BS),
- two first metal section (1) with length higher than the lateral edges (BL) of each of said solar modules (M) and also provided with L-shaped cross-section, being formed of a first wing (10) and a second wing (11) that protrudes perpendicularly from one of the longitudinal edges of the first wing (10); wherein said first wing (10) is provided towards one end, in correspondence of the section exceeding the length of said lateral edges (BL) of the solar module (M), with a through hole (12) for a screw (V1),
- one second metal section (2) provided with a substantially vertical bearing wall (20), comprising an upper section (21) joined by means of a horizontal step (22), with width basically equal to the thickness of each of said solar modules (M), with lower section (23) in forward position with respect to the first one; wherein said bearing wall (20) is provided on the back with:
• a second longitudinal wing (25) in parallel position under said step (22), protruding for the entire length of said lower section (23) of the bearing wall (20) with width basically equal to the thickness of each of said solar modules (M),
• a box-shaped longitudinal section (200) situated in the central area of the bearing wall (20), having a length lower than the bearing wall (20); wherein said box-shaped section (200) is joined in upper position to the top longitudinal border of said bearing wall (20) and in lower position to the longitudinal border of a second vertical wall (204) protruding downwards from said second wing (25) in opposite position to the lower section (23) of the bearing wall (20), in such manner to originate an overturned U-shaped housing (206) situated under said second wing (25),
- two third metal section (3) basically provided with "overturned omega-shaped" profile, being formed of a horizontal wall (30), from the longitudinal borders of which two edges (31) protrude upwards, having a height at least equal to the thickness of each of said solar modules (M); wherein a basically horizontal wing (32) branches off outwards from the top of each of said edges (31), being adapted to support longitudinal seal means (4) in lower position; said horizontal wall (30) being centrally provided with a longitudinal channel (34) for self-tapping screws (V2), wherein
the lateral edges (BL) of a solar module (M) overlap said first wings (10) of said two first metal sections (1) and are engaged against the internal side of the second wings (11) of the first metal section (1), said longitudinal step (22) of the second metal section (2) is engaged against the lower horizontal border (BI) of the solar module (M), said upper section (21) of the vertical bearing wall (20) of the second metal section (2) is engaged against the front side of the solar module (M), said second metal section (2) does not cover the holes (12) of said two first metal sections (1), when mounted on the solar panel, the upper horizontal border (BS) of the following solar module (M) is inserted into an overturned-U shaped housing (206) of the second metal section (2) fixed to the lower horizontal border (BI) of the solar module (M) in upper position.

**2.** The apparatus of claim 1, **characterized in that** said second wing (11) of the first metal section (1) has a height basically equal to the thickness of each solar module (M).

**3.** The apparatus of claim 1, **characterized in that** said vertical bearing wall (20) of the second metal section (2) is provided with a first longitudinal wing, in equidistant intermediate position between said step (22) and said second longitudinal wing (25).

**4.** The apparatus of claim 3, **characterized in that** said bearing wall (20) of said second metal section (2) is provided with a first portion (23a) with inclined profile and a second portion (23b) in lower position with vertical profile.

**5.** The apparatus of one or more of the preceding claims, **characterized in that** said box-shaped section (200) of said second metal section (2) is formed of:
- a first inclined wall (201) joined with the top longitudinal border of said upper section (21) of said bearing wall (20)
- a first vertical wall (202) joined with the lower longitudinal border of said first inclined wall (201), substantially at the eight of said step (22)
- a second inclined wall (203), facing towards said bearing wall (20), which is joined on top, basically at the height of said second wing (25), with the lower longitudinal border of said vertical wall (202) and in lower position with said second vertical wall (204), which is joined in turn with said second wing (25) in upper position
- a partition (205) branching off in coplanar direction from said first wing (24) and joined with the internal side of said first horizontal wall (202).

**6.** The apparatus of claim 1, **characterized in that** each of said wings (32) of said third metal section (3) is provided with a substantially S-shaped section (3), being formed of a first flat portion (32a), a short upward-inclined portion (32b) and a second flat portion (32c) at a height slightly higher than the first flat portion (32a).

**7.** The apparatus of claim 6, **characterized in that** said longitudinal seal means provided in each of said wings (32) of the third metal section (3) consist in seals made of rubber or other suitable materials (4) adapted to be attached in correspondence of pairs of L-shaped longitudinal sections (33) in symmetrically opposite position, protruding in lower position from said second flat portion (32c) of each wing (32).
